# EUROPEAN PATENT APPLICATION

(11) **EP 2 455 995 A2**
(43) Date of publication of application: **23.05.2012**
(21) Application number: 10799980.7
(22) Date of filing: 29.06.2010
(51) Int. Cl.: H01M 2/02, H01M 2/10

(54) **SECONDARY BATTERY AND ENERGY STORAGE DEVICE**

(30) Priority: 15.07.2009 KR 20090064395
(71) Applicant: Route JD, Inc., Chungcheongnam-do 320-844 (KR)
(72) Inventor: KIM, Young-Dug, Daejeon 305-758 (KR); JUNG, Young-Ho, Daejeon 300-220 (KR)
(74) Representative: von Kreisler Selting Werner
(86) International application number: PCT/KR2010/004194
(87) International publication number: WO 2011/007969

(57) **Abstract**

Provided as a secondary battery including a metallic can including a accommodating portion accommodated with an electrode assembly and an electrolyte together, and an opening portion; a metallic cap positioned in the opening portion of the can to seal the can; and a fuse-joining member having the melting point lower than that of the can and the cap, and being fused-joined in a state interposed at a joining portion between the can and the cap, and/or in the state surrounding around the joining portion.

## Description

### [TECHNICAL FIELD]

The present invention relates to a secondary battery and an energy storing apparatus, and in more detail, to lithium (ion and/or polymer) secondary battery, and the energy storage apparatus such as capacitors and fuel cell.

### [Background Art]

Generally, structures of portable electronic products such as digital camera, camcorders, mobile phones, handheld PC become lighter or multi-functioning, and therefore, researches about battery used as power of the electronic products are proceeding. Such a battery may be continuously used by charging/discharging.

In the ordinary way, the battery capable of repeatedly discharging and discharging, that is, the secondary battery is classified into nickel-cadmium battery, nickel hydrogen battery, nickel zinc battery, lithium secondary battery etc., and the lithium secondary battery among them is generally used when considering life and capacity.

The lithium secondary battery is classified into lithium metal battery and lithium ion battery using liquid electrolyte, and lithium polymer battery using a polymer solid electrolyte according to types of the electrolyte. The lithium polymer battery is classified into a complete solid type lithium polymer battery no contained with an organic electrolyte, and a lithium ion polymer battery using a gel type polymer electrolyte contained with an organic electrolyte according to the types of the polymer solid electrolyte.

The lithium ion secondary battery has energy density and repetition use life characteristics better than the existing secondary battery products, and the demand and the use range for the lithium ion secondary battery have been steadily increasing because of these advantages. However, the lithium ion secondary battery maintains the performance more reliably for changes in the external environment and risk factors due to high energy density, and requires fundamental safety device in product design to prevent a damage of safety caused when contents of the battery are leaked into the outside of a case(pack) in abnormal situation.

The cladding (for example, case or pack) of a metal material surrounding the electrode assembly has long been used as means capable of meeting these needs, and a shape and size thereof also exists variously. However, regardless of its form, the existing metal cladding includes a can (container) accommodating contents of the battery, and a cap(lid) covering the can, and steel, stainless steel, aluminum and other metals or an alloy thereof are used as the material thereof.

Typically, to adhere the can and the cap or to seal the contact portion between the can and the cap by the cladding of the battery, for example, a method such as physical fastening such as compressing or crimping etc. and fastening etc. by heat processing such as welding etc. has been used. Particularly, in the welding way, the basic material (the can and the cap) is melted, mixed, and coagulated at the joining portion, and therefore, ensures stable sealing performance of the battery because of permanent joining of the joining portion. When welding the metal cladding, for example, laser welding, arc welding, arc welding, plasma welding etc. have been used, and the prior art related to the present invention may refer to several patent applications filed by the present applicants (Korea Patent Application No. 2000-0021513; Korea Patent Application No. 2000-0014318; Korea Patent Application No. 2000-0044179; and Korea Patent Application No. 2003-0065237).

The metal cladding permanently adhered and/or sealed by the welding way provides reliability for long-term use of the battery, preserves contents of the battery from external environment factors such as pressure and mechanical shock, temperature and humidity changes, and simultaneously, effectively prevents the hazardous chemicals of the battery inside from leaking out.

However, the sealing method in the related art welding the can and the cap of the battery by the way such as the welding etc. using the metal cladding has the following problems.

First, since the basic material(cladding) should be directly melted, high heat generation is needed(the melting temperature of iron and stainless steel is 1500°C, and the melting temperature of aluminum is 660°C or more).

Second, in the sealing process, since the high heat is directly applied to the cladding, the components (for example, separator, electrolyte etc.) of the battery weak to heat are subjected to a vulnerable damage.

Third, the optimization of welding conditions is tricky, and therefore, time and cost required for welding are increased.

Fourth, micro-defects such as pin hole may occur in the welding portion by modification and/or degeneration of the basic material caused during the welding process.

Fifth, since it is difficult to control the area of the joining (or welding) area, there is limit to control the welding strength. Particularly, in the case of thin wide area battery having high capacity/high output characteristic, as the joining distance and the joining area are increased, time and cost required for welding are increased much.

On the other hand, on the contrary to demand for stable sealing of the battery, when the pressure and the temperature of the battery inside is increased due to abuse or other causes of the battery, it is necessary to stabilize high temperature and pressure of the battery inside into room temperature and pressure by collapsing the sealing state of the battery as soon as possible. Because of this, the secondary battery (particularly, in the case of the secondary battery using the metal cladding) includes a special pressure relief mechanism such as, for example, vents, and the pressure relief mechanism may stabilize the battery by connecting the battery inside and outside to each other in abnormal situation of the battery.

However, since the batteries in the related art using the metal cladding include the pressure relief mechanism having different design according to model, size, capacity, use forms etc. of each battery, costs and process manufacturing the battery are increased, thereby to increase the cost of the product.

### [Disclosure]

### [Technical Problem]

An advantage of some aspects of the invention is that it provides a secondary battery having improved sealing structure of metal cladding of battery so that heat to be transferred to battery inside may be minimized, it is possible to easily and quickly perform the sealing without restriction such as the shape of the joining portion, the modification of the basic material is not present by joining a heterogeneous metal fused material at the temperature (for example, it may be chosen from near 140°C) lower than melting point of basic material, and the joining area may be controlled by controlling application amount of the heterogeneous metal fused material.

Another advantage of some aspects of the invention is that it provides a secondary battery in which vent mechanism capable of removing sealing of the battery at certain temperature is integrated with the sealing and/or the joining portion of the battery, by improving the demand conditions for design of the special vent mechanism and by choosing suitable raw material of heterogeneous metal fused material. Therefore, the secondary battery having vent integrated sealing design capable of controlling pressure durability may be implemented by easily controlling the application amount of the fused material and the joining area.

### [Technical Solution]

An advantage of some aspects of the invention is that it provides a secondary battery including a metallic can including an accommodating portion accommodated with an electrode assembly and an electrolyte together, and an opening portion; a metallic cap positioned in the opening portion of the can to seal the can; and a fuse-joining member having the melting point lower than that of the can and the cap, and being fuse-joined in the state interposed at a joining portion between the can and the cap, and/or in the state surrounding around the joining portion.

Preferably, the joining or sealing state between the can and the cap may be controlled by a melting point of the fuse-joining member.

Preferably, the sealing or the joining strength between the can and the cap may be controlled by the area of the fuse-joining member interposed between the can and the cap.

Preferably, the fuse-joining member also functions as vent means removing the joining or sealing state at a predetermined temperature so that pressure durability of the secondary battery may be controlled.

Preferably, the fuse-joining member, being in contact with the joining portion, to be fused and then coagulated is pre-formed in the predetermined shape.

Preferably, the fuse-joining member is liquefied material applied around the joining portion.

Preferably, the fuse-joining member is a paste type printed to the joining portion of the cap.

Preferably, at least one side of the can and the cap forming the joining portion is provided with an accommodating groove capable of accommodating the fuse-joining member.

Preferably, the can and/or the cap are composed by single metal including iron, aluminum and copper, or an alloy including brass, bronze and stainless steel.

Preferably, the fuse-joining member includes any one selected from the group consisting of lead, tin, zinc, aluminum, silver or an alloy thereof.

Preferably, the alloy includes any one selected from the group consisting of Zn-Al series, Sn-Pb series, Sn-Ag-Cu series, Sn-Zn series and Sn-Bi-Ag series.

Preferably, the fuse-joining member has the melting point between about 100°C to 450°C, more preferably about 138°C to 250°C.

Preferably, the surface of the joining portion of the can and/or the cap is applied with nickel or copper to improve the joining performance with the fuse-joining member.

Further, an energy storage apparatus according to another aspect of the invention may be expanded to energy storage devices etc. such as secondary battery except lithium ion secondary battery, capacitors, fuel cell, and the energy storage apparatus includes a metallic first cladding having an accommodating portion accommodating the components for the energy storage devices including electrode assemblies for secondary battery or pole plate assemblies for capacitor or fuel cell, and including an opening portion; a metallic second cladding positioned in the opening portion of the metallic first cladding; and a fuse₋joining member having the melting point lower than metallic first cladding and the metallic second cladding, being fuse-joined at a joining portion between the metallic first cladding and the metallic second cladding, and including metal or metal compound different from the metallic first and second cladding.

The material of the first or/and the second cladding includes materials preventing contents accommodated to the accommodating portion from leaking out or preventing the air from inflowing, and having airtightness in the range capable of normally operating the contents for the difference in pressure between the inside and the outside, physical, chemical, climatic and environmental impacts.

Preferably, the first cladding and/or the second cladding have thermal conductivity of about 10 kcal/mh°C (20°C) or more, tensile strength of about 5kgf/mm² or more, thickness of about 30µm or more.

Preferably, the joining or the sealing of the fuse-joining member is fused by heat and/or pressure, and then, coagulated to fasten the position of the metallic first and second cladding.

### [Advantageous Effects]

The secondary battery of the invention has the following effects by using the method applying metal/metal compound having the melting point lower than that of the basic material to the joining side of the cladding or around the joining portion, and sealing the battery by the applied heterogeneous metal/metal compound in the process melting and attaching heterogeneous metal or metal compound having certain melting temperature range to the basic material (stainless steel, aluminum, iron, etc.) targeted by the joining when sealing the metallic cladding.

First, various products may be sealed without restriction for shape of the joining portion and the products.

Second, heat damage to be applied to the components of the basic or the battery may be prevented by performing the joining at a lower temperature as compared to the joining method in the related art, that is, welding way.

Third, the type and the melting point of the heterogeneous metal/metal compound used as the fused material are variously present, and therefore, the selection width for the material is wide.

Fourth, since the melting(fusing) point of the joining portion is controlled freely, a temperature-sensitive vent mechanism to be controlled relatively accurately may be integrated with the joining portion in the specific temperature range.

Fifth, when controlling the application area (the joining area), the joining portion itself may be also utilized as pressure-sensitive vent mechanism to be controlled in the specific pressure range.

The field effectively applying the secondary battery of the invention is thin wide area secondary battery products, and therefore, the invention has the effect for complementing and improving the vulnerability of the prior art.

As mentioned above, the secondary battery of the invention may be also extended to the case etc. surrounding the components of the energy storage apparatus such as capacitors and fuel cell in addition to the lithium ion secondary battery.

### [Description of Drawings]

The following drawing drawings attached to the present specification illustrates an exemplary embodiment of the invention, and serves to further understand the technical idea of the invention along with a detailed description of the invention, Therefore, the invention is not limited to matters described in the drawings.
FIG. 1 is a disassembled prospective view schematically showing configuration of secondary battery according to an exemplary embodiment of the invention.
FIG. 2 is a plan view schematically showing a cap of FIG. 1.
FIG.3 describes the matters to be considered when selecting temperature/pressure range of a fuse-joining member according to an exemplary embodiment of the invention.
FIG.4 is a prospective view schematically showing an example of a fuse-joining member according to an exemplary embodiment of the invention.
FIG. 5 and 6 are configuration views schematically showing processes sealing a secondary battery according to an exemplary embodiment of the invention, respectively.
FIG. 7 and 8 are sectional views schematically showing a secondary battery according to another embodiment of the invention, respectively.
FIG. 9 is a sectional view describing a modified example of an accommodating groove formed in a surface of a can and a cap according to an exemplary embodiment of the invention.
FIG. 10 is a prospective view schematically showing a sealing assembling process of the secondary battery according to another embodiment of the invention.
FIG. 11 is a prospective view schematically showing a joining process of the secondary battery according to another embodiment of the invention.

### [Mode for Invention]

Hereinafter, a secondary battery according to an exemplary embodiment of the invention will be described with reference to the attached drawings. In the drawings, like reference numerals refer to like elements.

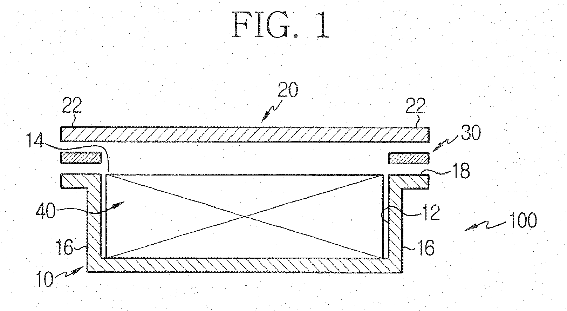

FIG. 1 is a disassembled prospective view schematically showing configuration of secondary battery according to an exemplary embodiment of the invention.

Referring to FIG.1, the secondary battery 100 includes a metallic can 10, a metallic cap 20, and a fuse-joining member 30 interposed in a joining portion between the can 10 and the cap 20.

The can 10 includes an accommodating portion 12 accommodating components of the battery including an electrode assembly 40 and electrolyte (not shown), and an opening portion 14 in which one end thereof is opened. The can 10 self may perform a function of an electrode terminal. In the present embodiment, although the can 10 shows as a square shape battery of a tetrahedron, one skilled in the art will easily understand that it is possible to modify as any dimensions required in the industry such as a cylindrical battery or any other form of battery. Although the accommodating portion 12 of the can 10, which accommodates the electrode assembly 40 and the electrolyte and seals them, shows as a rectangular type, the accommodating portion 12 may be modified as a shape corresponding to a form of the electrode assembly 40 to be actually assembled. The opening 14 of the can 10 is covered by the cap 20, and particularly, the form and size thereof is not limited thereto.

The can 10 includes a substantially flat joining plan 18 of a flange type protruded by the predetermined length in outer direction substantially orthogonal to a side wall 16. The joining plan 18 of such a flange type is to secure stable joining area for a thickness of the can 10.

In an exemplary embodiment of the invention, the can 10 and/or the cap 20 prevent contents such as the electrode assembly 40 and the electrolyte accommodated to the accommodating portion 12 from leaking out and prevent the air from inflowing, and include materials having airtightness in the range capable of normally operating the contents for the difference in pressure between the inside and the outside, physical, chemical, climatic and environmental impacts. For example, the can 10 and/or the cap 20 have thermal conductivity of about 10 kcal/mh°C(20°C) or more, tensile strength of about 5kgf/mm2 or more, thickness of about 30µm or more.

The electrode assembly 40 is a structure in which the an anode plate/ a separator/ a cathode plate are sequentially arranged(for example, a lamination type laminated by a plurality of unit electrodes or a jelly-roll type wound by the unit electrode), the overall appearance may be variously modified, such as rectangular or coin type.

Typically, in the secondary battery, the anode plate is the structure in which the anode active material composed mainly of lithium oxide is applied on at least one side of an anode collector of an aluminum sheet, and the cathode plate is the structure in which the cathode active material composed mainly of carbon is applied on at least one side of a cathode collector of a copper sheet. The anode plate and the cathode plate include an anode tab and a cathode tab, respectively. The anode tab and cathode tab may be arranged at positions different from each other according to polarity, and an insulating tape may be attached to the anode tab and cathode tab protruded from the anode plate and the cathode plate to prevent short circuit between pole plates. Further, the separator uses a porous polymer film to separate the anode plate and the cathode plate. The structure of the electrode assembly configured by the anode plate/the separator/the cathode plate may be modified by one skilled in the art.

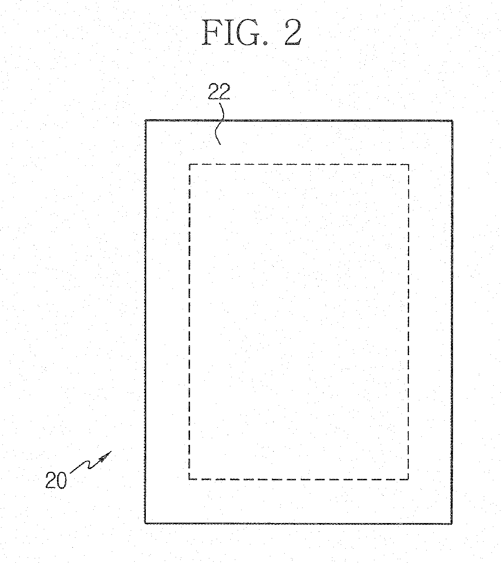

FIG. 2 is a plan view schematically showing a cap of FIG. 1.

In FIG.1 and FIG.2, the cap 20, which may cover and seal the opening portion 14 of the can 10, includes second joining plan 22 folded in the joining plan 18 of the can 10. The cap 20 has an overall plate shape, penetration holes (not shown) by which the electrode terminal (not shown) of the electrode assembly 40 may be penetrated may be formed, and if necessary, an insulating material, a terminal plate (not shown) etc. may be included on a bottom surface of the can 10. Further, the cap 20 may be provided with an injection port (not shown) of the electrolyte capable of injecting the electrolyte inside the can 10 in sealed state.

Further, in the can 10 and/or the cap 20, it is preferable to plate the surface of the joining portion with nickel or copper to improve the joining with the fuse-joining member 30.

The fuse-joining member 30 has a melting(fusing) point lower than that of a metallic can 10 and cap 20, and is positioned between the joining portions including the joining plan 18 of the can 10 and the second joining plan 22 of the cap 20.

The fuse-joining member 30 has a melting point lower than that of a basic material, has the melting point at which there is no risk of heat transfer in the inside, may expect a sufficient joining strength due to better joining with the basic material, also considers external factors (eg. cost, environmental affinity) except the performance of the battery, and may be selected among various kinds of metals and metal compounds by considering properties to be fused and sealed off when reaching a certain temperature. On the other hand, the reason, that the fuse-joining member 30 uses an alloy, may lower the melting point than that of single metal, may improve mechanical strength, may lower prices, may expect joining affinity with a basic material metal, and may have various liquidus-solidus temperature range. Available type and characteristics of the fuse-joining member 30 is the same as [table 1] below.

**[table 1]**

| Series | Type | Melting point |
|---|---|---|
| Sn-Pb | Sn-37Pb | 183°C |
| | Sn-40Pb | 190°C |
| | Sn-45Pb | 203°C |
| | Sn-50Pb | 215°C |
| | Sn-55Pb | 227°C |
| Sn-Cu | Sn-9.5Cu | 227°C∼422°C |
| | Sn-3Cu | 227°C∼312°C |
| | Sn-0.7Cu | 227°C |
| | Sn-0.7Cu-0.3Ag | 221°C∼227°C |
| | Sn-0.5Cu-0.06Ni | 220°C∼233°C |
| Sn-Zn | Sn-9Zn | 197°C∼198°C |
| | Sn-8Zn-3Bi | 190°C∼197°C |
| Sn-Ag | Sn-3.5Ag | 221°C |
| | Sn-3.0Ag-0.2Cu | 217°C∼220°C |
| | Sn-lAg-4Cu | 217°C∼225°C |
| | Sn-4Ag-0.11Ni | 221°C∼231°C |
| Others | Sn-49In | 117°C |
| | Sn-8In-3.5Ag-O.5Bi | 170°C~206°C |
| | Sn-57Bi-lAg | 138°C∼140°C |
| | Zn-5Al | 382°C |

On the other hand, in the exemplary embodiment of the present invention, although it is described that the fuse-joining member 30 contains lead, when considering eco-friendly factors, it is apparent to one skilled in the art by which lead or its alloys is not selected.

In the exemplary embodiment of the present invention, the fuse-joining member 30 has the melting point between about 100°C to 450°C, more preferably about 138°C to 250°C.

In the exemplary embodiment of the present invention, the fuse-joining member 30 is composed of, for example, Sn-8Zn-3Bi having the melting point of 190°C. In the case of method joining by plasma welding in the related art, high fever of 1000°C or more is directly applied to cladding, much energy/time is require to joining process conditions, the electrolyte is separated at 100°C, porosity the separator is closed at 120-140°C, and the separator is destroyed at 150-180°C. Therefore, main components of the secondary battery suffer heat damage during the welding process.

Accordingly, when considering the damage of the components for the secondary battery 100, the fuse-joining member 30 has meltable low temperature, high heat source is not preferably disposed during the process, and it is preferable to use general-purpose equipment(heater, and jig) (see below). Further, sealing performance of the fuse-joining member 30 is not removed or weakened in the general operation range (for example, under 80°C) of the secondary battery 100, the sealing performance is maintained not to cause leakage as long as internal pressure is not dramatically increased (range that does not cause internal short while not damaging the insulating properties of the membrane) on generalized heat-resistant severe test standards(UL standards for lithium-ion battery: 130°C). However, the sealing it is preferable to significantly remove the sealing performance before reaching internal thermal runaway starting temperature of the anode material known to get fatal risk for the safety of the battery. In elaborate description for this reason, discharge passing through sufficient area as compared to jet aspect of inner material even when operating the vent mechanism is difficult on the general vent mechanism (the vent means is provided with some small area of cladding) of the secondary battery in the related art. However, in the vent mechanism-the fuse-joining member 30 of the present invention, intended wide area is utilized as the vent mechanism, and temperature and duration pressure may be easily control in such a range.

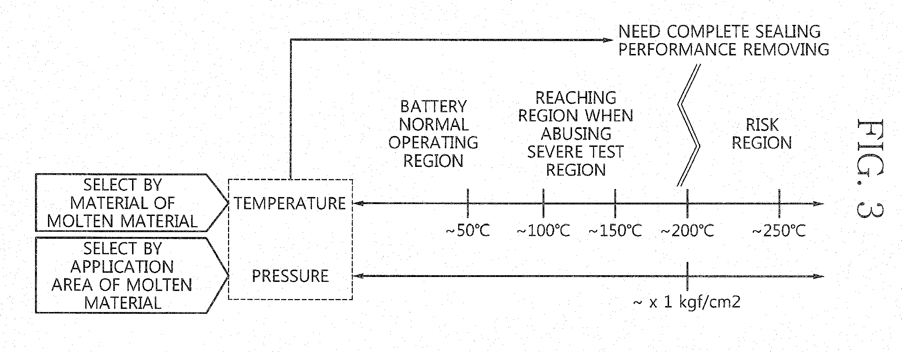

Temperature/pressure range selection of the fuse-joining member 30 according to the embodiments of the invention is described in FIG. 3. The temperature and pressure of FIG.3 are merely exemplary, the optimum values thereof may be controlled variously.

The joining or sealing state between the can 10 and the cap 20 is controlled according to the melting point of the fuse-joining member 30. Further, the joining or sealing state between the can 10 and the cap 20 may be controlled by the melting point of the fuse-joining member. Further, the joining or sealing strength between the can 10 and the cap 20 may be controlled by the area of the fuse-joining member 30 interposed between the can 10 and the cap 20.

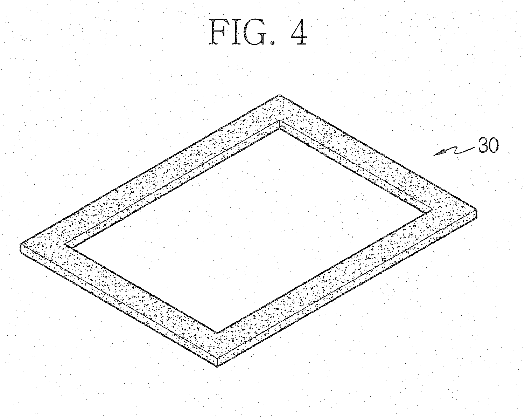

FIG.4 is a prospective view schematically showing an example of the fuse₋joining member 30 according to an exemplary embodiment of the invention.

In FIG. 1 and 4, the section of the fuse-joining member 30 is quadrangle so that the fuse-joining member 30 of the present embodiment contact joining plan 18 of the can 10 and second joining plan 22 of the cap 20, respectively, and then, is fused and coagulated, and therefore, the fuse-joining member 30 is pre-formed by ring shape forming a closed loop of rectangle. The forming method may be implemented by already known various ways. The fuse-joining member 30 is formed in a solid-state, and seals the joining portion between the can 10 and the cap 20 by, for example, heating direct heating by hot-wire heater(not shown), ultrasonic heating by high₋frequency and resistance heat, and while being compressed and fused by the pressure applied by jig (not shown) etc.

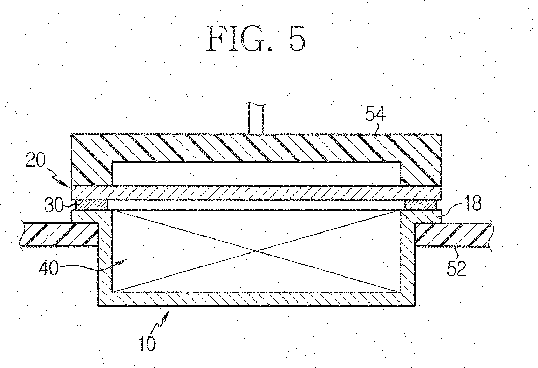

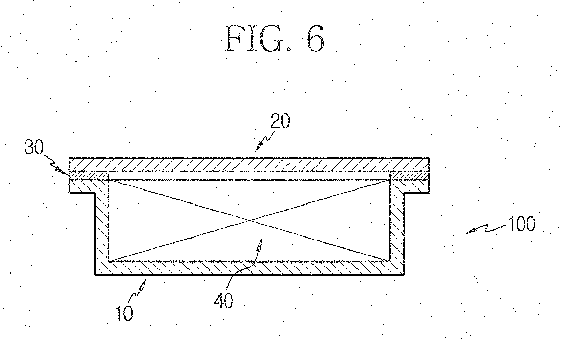

FIG. 5 and 6 are configuration views schematically showing processes sealing a secondary battery according to an exemplary embodiment of the invention, respectively.

As shown in FIG.5, a end of a bottom jig 52 allows the fuse-joining member 30 to position on the joining plan 18 of the can 10 in the state supporting the flange of the can 10 by inserting the can10 accommodated with the electrode assembly 40 into opening of the bottom jig 52, and the cap 20 is folded on the fuse-joining member 30. Then, when pressing top jig 54 into the top of the cap 20 and pressurizing by a predetermined pressure and temperature, as shown in FIG. 6, the cap 20 is stably fastened into the can 10 while fusing and then, coagulating the fuse₋joining member 30.

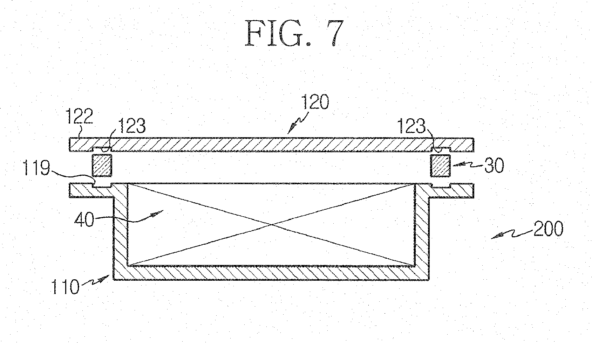

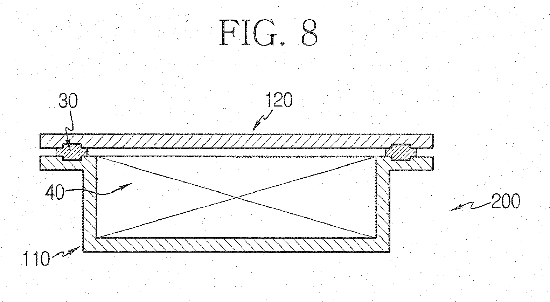

FIG. 7 and 8 are sectional views schematically showing a secondary battery according to another embodiment of the invention, respectively.

In FIG. 7 and 8, the secondary battery 200 includes an accommodating groove 119, 123 to accommodate the fuse-joining member 30 pre-formed in at least one place of the joining plan 118 of the can 110 and the second joining plan 122 of the cap 120. That is, in the present invention, the can 110 and the cap 120 are positioned to insert the fuse-joining member 30 into the accommodating groove 119, 123, when compressing the can 110 and the 120 at the predetermined pressure and temperature by the jig or anther devices, the fuse-joining member 30 is melted. Then, if the fuse-joining member 30 is fused and coagulated in the joining plan 118 and the second joining plan 122, the can 110 and the cap 120 is stably sealed or joined.

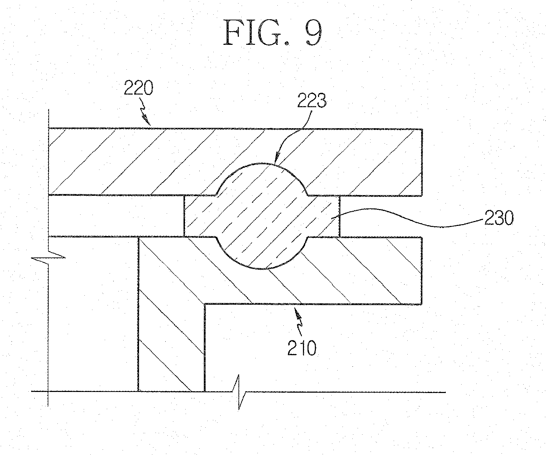

Although the accommodating grooves 119, 123 of FIG. 7 and 8 are concavely formed on the joining surfaces 118, 122 of the can 110 and the cap 120 as right angle shape, as shown in FIG. 9, the accommodating groove 223 etc. of the recess type concavely formed on at least one surface of the joining surfaces of the can 210 and the cap 220 may be modified by one skilled in the art. In the present invention, the fuse-joining member 230 having the section of circle may be pre-formed.

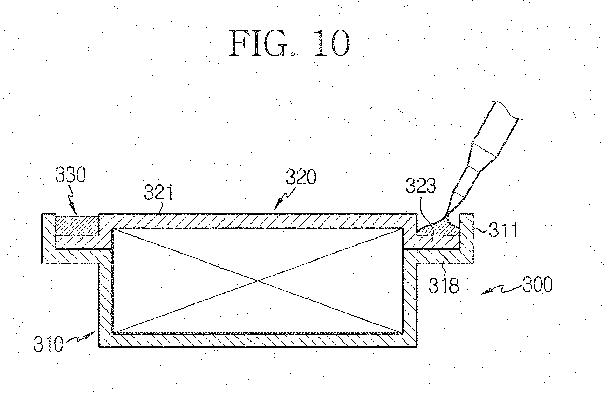

FIG. 10 is a prospective view schematically showing a sealing assembling process of the secondary battery according to another embodiment of the invention.

In FIG.10, in the secondary battery of the present invention, the can 310 includes an extension portion 311 substantially vertically extended to a joining plan 318, the cap 320 is stepped-formed from corner of the cap plate 321 and contacts the joining plan 318 of the can 310, the predetermined of space is formed when the end thereof contacts a side wall of the extension portion 319, and the step portion 323 capable of accommodating a liquefied fuse-joining member 330 is provided in the space.

In the present invention, after positioning the cap 320 in the state accommodating the electrode assembly 40 into the inside of the can 310, the (liquefied) fuse-joining member 330 of melting state is poured on the space formed with the extension portion 319 and the step portion 323, and then, the can 310 and the cap 320 may be sealed and joined when coagulating the fuse-joining member 330. In the present embodiment, a gasket (not shown) may be interposed in the portion that the can 310 contacts the cap 320.

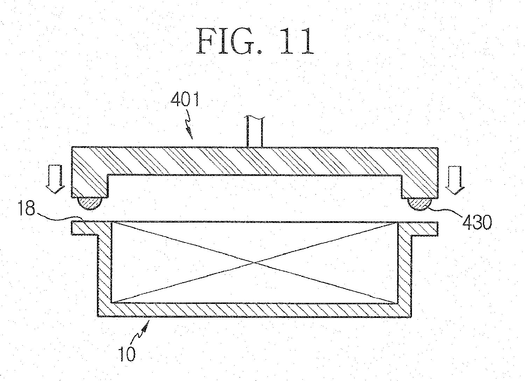

FIG. 11 is a prospective view schematically showing a joining process of the secondary battery according to another embodiment of the invention.

In FIG.11, solar battery of the present invention uses the can 10 and the cap 20 shown in FIG. 1 and 2, after the fuse-joining member 430 is printed to the joining surface 18 of the can 10 in paste state using already known solder paste printer 401 in the related art, the can 10 and the cap 20 may be fused-joined by heating and pressurizing with the predetermined of temperature and pressure in the state folded with the cap 20 on the fuse-joining member 430.

To check the effect of the present invention, the performance of the manufactured lithium ion secondary battery had been tested. To perform the present test, SUS 304 stainless cladding (thickness 250µm, Ni plating) had been joined(sealed), and square battery(148x210x6.5, unit mm) of 15Ah capacity had been manufactured.

The comparative product used the secondary battery joined with the can and the cap by the plasma welding in the related art, and the present product used the secondary battery fused-joined with the can and the cap by the fuse-joining member having Sn-8Zn-3Bi(melting point:191°C) as the material.

Test items are as follows.
(1) capacity:0.5C/0.2C standard charging and discharging capacity
(2) high temperature preservation characteristics:
   ① kept 7 days at 80°C, and measured visual inspection/weight change
   ② after storing during 3 hours at 150°C, measured visual inspection/weight change
(3) reducing pressure test: after reducing pressure during 24 hours at -760mm/Hg, measured visual inspection/weight change
(4) heating test: heated at 5°C/minute up to room temperature-400°C, and observed occurrence phenomenon
(5) impact test: after battery is fastened into the jig, and the impact of best acceleration 150gn / duration 6ms had been applied 6 times per each axis(x, y, z axis)

The result of the experiment is the same as [table 2] below.

**[table 2]**

| Experiment items | Results | | Note |
|---|---|---|---|
| | Comparative product (welding sealing) | experimental product (heterogeneous metal fuse-joining sealing) | |
| capacity | 15.1Ah | 15.1Ah | no difference |
| high temperature preservation characteristic 1 | no visual change before and after test | no visual change before and after test | |
| | weight change : | weight change : | |
| | 534.95-> 534.94g | 527.73-> 527.72g | |
| | (Δ =-0.01g) | (Δ =-0.01g) | |
| high temperature preservation characteristic 2 | no visual change before and after test | no visual change before and after test | no difference |
| | weight change : | weight change : | |
| | Δ =-0.02g/ | Δ =-0.01g/ | |
| | 7days lapse | 7days lapse | |
| reducing pressure test | no visual change before and after test | no visual change before and after test | no difference |
| | weight change : | weight change : | |
| | Δ =0.00g | Δ =0.00g | |
| heating test | strongly ignited at temperatures of more than 250 degree Celsius, simultaneously ripped some side of cladding, and strongly jet contents | cladding sealing had been removed at temperatures of near 200 degree Celsius, and contents had been weakly jet. ignited at temperatures of more than 250 degree Celsius to be continually heated, but no strong jet(explosion) | experimental product: improved high temperature stability |
| Impact test | no visual change before and after test | no visual change before and after test | no difference |
| | weight change : Δ =0.00g | weight change : Δ =0.00g | |

As mentioned above, although particularly useful in the case that the secondary battery according to an exemplary embodiment of the invention is applied to thin wide area square shape battery (when starting-ending distance of joining portion is long or area is large), on the other hand, for example, may be applied to various battery such as the secondary battery such as cylindrical battery and coin battery, nickel-cadmium battery and nickel metal hydrogen battery, and the cladding or the joining structure or shape thereof.

Further, an energy storage apparatus according to another aspect of the invention may be expanded to energy storage devices etc. such as capacitors, fuel cell, and the energy storage apparatus includes a metallic first cladding having an accommodating portion accommodating the components for the energy storage devices including pole plate assemblies for capacitor or fuel cell already known and including an opening portion; a metallic second cladding folded in the opening portion of the metallic first cladding; and the fuse-joining member having the melting point lower than that of the metallic first cladding and the metallic second cladding, being fused-joined at the joining portion between the metallic first cladding and the metallic second cladding, and including metal or metal compound different from the metallic first or second cladding. Here, the joining or the sealing of the fuse-joining member is fused by heat .and/or pressure, and then, coagulated to fasten the position of the metallic first and second cladding.

Although the preferred embodiments of the present invention are shown and described above, the present invention is not limited to above-described specific embodiment and is variously modified by one skilled in the art without the gist of the present invention claimed in the claim.

### [Industrial Applicability]

An industrial applicability is included in the description of the present application.

## Claims

1. A secondary battery, comprising:
a metallic can including an accommodating portion accommodated with an electrode assembly and an electrolyte together, and an opening portion;
a metallic cap positioned in the opening portion of the can to seal the can; and
a fuse-joining member having the melting point lower than that of the can and the cap, and being fuse-joined in the state interposed at a joining portion between the can and the cap, and/or in the state surrounding around the joining portion.

2. A secondary battery according to claim 1, wherein the joining or sealing state between the can and the cap is controlled by a melting point of the fuse-joining member.

3. A secondary battery according to claim 1 or 2, wherein the sealing or the joining strength between the can and the cap may be controlled by the area of the fuse-joining member interposed between the can and the cap.

4. A secondary battery according to claim 1, wherein the fuse-joining member also functions as vent means removing the joining or sealing state at a predetermined temperature so that pressure durability of the secondary battery may be controlled.

5. A secondary battery according to claim 1, wherein the fuse-joining member, being in contact with the joining portion, to be fused and then coagulated is pre-formed in the predetermined shape.

6. A secondary battery according to claim 1, wherein the fuse-joining member is liquefied material applied around the joining portion.

7. A secondary battery according to claim 1, wherein the fuse-joining member is paste type printed to the joining portion of the cap.

8. A secondary battery according to claim 1, wherein at least one side of the can and the cap forming the joining portion is provided with an accommodating groove capable of accommodating the fuse-joining member.

9. A secondary battery according to claim 1, wherein the can and/or the cap are composed by single metal including iron, aluminum and copper, or an alloy including brass, bronze and stainless steel.

10. A secondary battery according to claim 1, wherein the fuse-joining member includes any one selected from the group consisting of lead, tin, zinc, aluminum, silver or an alloy thereof.

11. A secondary battery according to claim 10, wherein the alloy includes any one selected from the group consisting of Zn-Al series, Sn-Pb series, Sn-Ag-Cu series, Sn-Zn series and Sn-Bi-Ag series.

12. A secondary battery according to claim 1, wherein a material of the can and/or the cap includes materials preventing the electrode assembly and the electrolyte accommodated to the accommodating portion from leaking out or preventing the air from inflowing, and having airtightness in the range capable of normally operating the electrode assembly and the electrolyte for the difference in pressure between the inside and the outside, physical, chemical, climatic and environmental impacts.

13. A secondary battery according to claim 1, wherein the can and/or the cap have thermal conductivity of about 10 kcal/mh°C(20°C) or more, tensile strength of about 5kgf/mm² or more, thickness of about 30µm or more.

14. A secondary battery according to claim 1, wherein the fuse-joining member has the melting point between about 100°C to 450°C, more preferably about 138°C to 250°C.

15. A secondary battery according to claim 1, wherein the surface of the joining portion of the can and/or the cap is applied with nickel or copper to improve the joining performance with the fuse-joining member.

16. An energy storage apparatus, comprising;
a metallic first cladding having an accommodating portion accommodating the components for the energy storage devices including electrode assemblies for secondary battery or pole plate assemblies for capacitor or fuel cell, and including an opening portion;
a metallic second cladding positioned in the opening portion of the metallic first cladding; and
a fuse-joining member having the melting point lower than that of the metallic first cladding and the metallic second cladding, being fuse-joined at a joining portion between the metallic first cladding and the metallic second cladding, and including metal or metal compound different from the metallic first and second cladding.

17. The energy storage apparatus according to claim 16, wherein the material of the first or/and the second cladding includes materials preventing contents accommodated to the accommodating portion from leaking out or preventing the air from inflowing, and having airtightness in the range capable of normally operating the contents for the difference in pressure between the inside and the outside, physical, chemical, climatic and environmental impacts.

18. The energy storage apparatus according to claim 16, wherein the first and/or the second cladding have thermal conductivity of about 10 kcal/mh°C(20°C) or more, tensile strength of about 5kgf/mm² or more, thickness of about 30µm or more.

19. The energy storage apparatus according to claim 16, wherein the joining or the sealing is fused and then coagulated by heat and/or pressure, and fastens the position of the metallic first and second cladding.
